# EUROPEAN PATENT APPLICATION

(11) **EP 3 467 732 A1**
(43) Date of publication of application: **10.04.2019**
(21) Application number: 18198412.1
(22) Date of filing: 03.10.2018
(51) Int. Cl.: G06Q 10/06

(54) **SPLIT ENTERPRISE/PROVIDER WORKFLOWS**

(30) Priority: 03.10.2017 US 201715723443
(71) Applicant: Avaya Inc., Santa Clara, CA 95054-1233 (US)
(72) Inventor: EZELL, Joel, Broomfield, CO Colorado 80023 (US)
(74) Representative: Williams, David John

(57) **Abstract**

A provider system (e.g., a cloud based provider system) receives a workflow. For example, the workflow may be for handling a voice communication session in a contact center. The workflow comprises a plurality of workflow tasks. The workflow tasks comprise enterprise workflow tasks and provider workflow tasks. The identified provider workflow tasks are executed on the provider system according the workflow. The provider system initiates execution of the identified enterprise workflow tasks on the enterprise system according to the workflow. By allowing a split workflow between the provider system and the enterprise, exposure to sensitive information used by the provider system may be limited.

## Description

### BACKGROUND

As the Internet has become more pervasive, the use of cloud computing services has increased dramatically. For example, Communications Platform as a Service (CPaaS) is becoming increasingly popular. Likewise, Contact Center as a Service (CCaaS) has become even more popular.

Services, such as CPaaS and CCaaS are relatively easy to work with. However, making modifications to accommodate custom applications in CPaaS and CCaaS can become complex. Most developers do not have the necessary skills to develop communication applications for these services.

In addition, architectures, such as CCaaS generally call the enterprise data center CCaaS software for each action that an application initiates. This can be slow and expensive because of the overhead in communicating with the CCaaS when it is provided as a cloud service.

Moreover, as migration to CPaaS and CCaas take place, customers are becoming increasingly concerned with exposing sensitive information in a cloud service. What is needed is a solution that provides rapid development, is easy customizable, uses less network traffic, and provides limited exposure of sensitive information.

### SUMMARY

These and other needs are addressed by the various embodiments and configurations of the present disclosure. A provider system (e.g., a cloud based provider system) receives a workflow. For example, the workflow may be for handling a voice communication session in a contact center. The workflow comprises a plurality of workflow tasks. The workflow tasks comprise enterprise workflow tasks and provider workflow tasks. The identified provider workflow tasks are executed on the provider system according the workflow. The provider system initiates execution of the identified enterprise workflow tasks on the enterprise system according to the workflow. By allowing a split workflow between the provider system and the enterprise, exposure to sensitive information used by the provider system may be limited.

The phrases "at least one", "one or more", "or", and "and/or" are open-ended expressions that are both conjunctive and disjunctive in operation. For example, each of the expressions "at least one of A, B and C", "at least one of A, B, or C", "one or more of A, B, and C", "one or more of A, B, or C", "A, B, and/or C", and "A, B, or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material".

Aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Any combination of one or more computer readable medium(s) may be utilized. The computer readable medium may be a computer readable signal medium or a computer readable storage medium.

A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

The terms "determine", "calculate" and "compute," and variations thereof, as used herein, are used interchangeably and include any type of methodology, process, mathematical operation or technique.

The term "Session Initiation Protocol" (SIP) as used herein refers to an IETF-defined signaling protocol, widely used for controlling multimedia communication sessions such as voice and video calls over Internet Protocol (IP). The protocol can be used for creating, modifying and terminating two-party (unicast) or multiparty (multicast) sessions consisting of one or several media streams. The modification can involve changing addresses or ports, inviting more participants, and adding or deleting media streams. Other feasible application examples include video conferencing, streaming multimedia distribution, instant messaging, presence information, file transfer and online games. SIP is as described in RFC 3261, available from the Internet Engineering Task Force (IETF) Network Working Group, November 2000; this document and all other SIP RFCs describing SIP are hereby incorporated by reference in their entirety for all that they teach.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The preceding is a simplified summary to provide an understanding of some aspects of the disclosure. This summary is neither an extensive nor exhaustive overview of the disclosure and its various embodiments. It is intended neither to identify key or critical elements of the disclosure nor to delineate the scope of the disclosure but to present selected concepts of the disclosure in a simplified form as an introduction to the more detailed description presented below. As will be appreciated, other embodiments of the disclosure are possible utilizing, alone or in combination, one or more of the features set forth above or described in detail below. Also, while the disclosure is presented in terms of exemplary embodiments, it should be appreciated that individual aspects of the disclosure can be separately claimed.

### BRIEF DESCRIPTION OF THE DRAWINGS

Fig. 1 is a block diagram of a first illustrative system for providing split workflows.
Fig. 2 is a block diagram of the elements of a workflow software system.
Fig. 3 is an exemplary user interface for developing split workflows for a communication session.
Fig. 4 is a flow diagram of a process for implementing split workflows.
Fig. 5 is a flow diagram of a process for allowing for multiple enterprises to use different cloud based split workflows.

### DETAILED DESCRIPTION

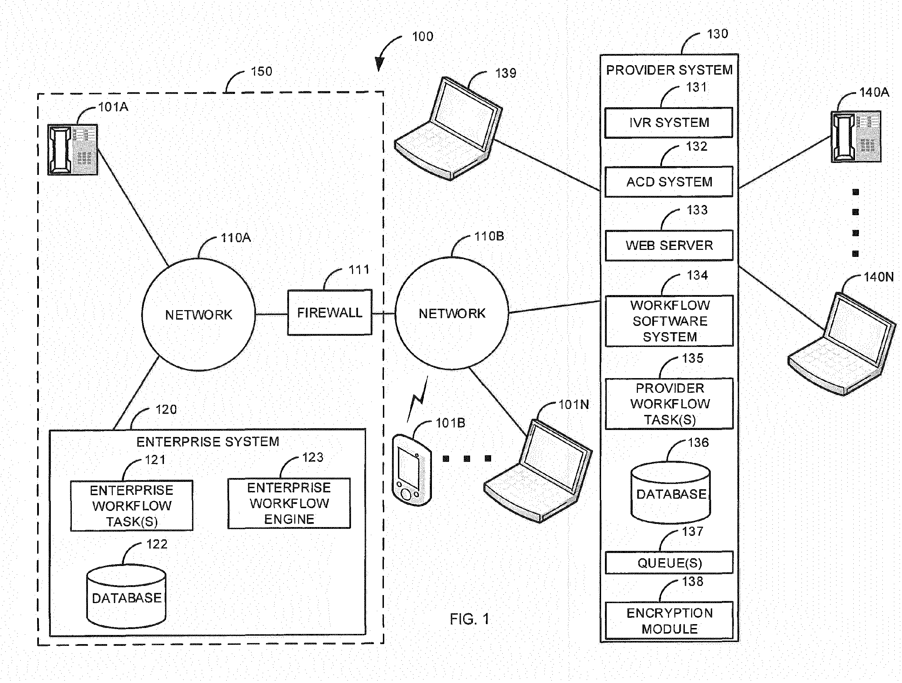

Fig. 1 is a block diagram of a first illustrative system 100 for providing split workflows. The first illustrative system comprises communication endpoints 101A-101N, networks 110A-110B, a firewall 111, an enterprise system 120, a provider system 130, a developer terminal 139, and agent terminals 140A-140N.

The communication endpoints 101A-101N can be or may include any communication endpoint device that can communicate on the networks 110A-110B, such as a Personal Computer (PC), a telephone, a video system, a cellular telephone, a Personal Digital Assistant (PDA), a tablet device, a notebook device, a web server 133, a media server, a smart phone, and the like. The communication endpoints 101A-101N are devices where a communication sessions ends. A communication session may comprise various types of communication media, such as voice communications, video communications, Instant Messaging (IM) communications, virtual reality communications, text messaging communications, multimedia communications, and/or the like. The communication endpoints 101A-101N are not network elements that facilitate and/or relay a communication session in the network 110, such as a communication manager or router. As shown in Fig. 1, any number of communication devices 101A-101N may be connected to the networks 110A-110B.

The networks 110A-110B can be or may include any collection of communication equipment that can send and receive electronic communications, such as the Internet, a Wide Area Network (WAN), a Local Area Network (LAN), a Voice over IP Network (VoIP), the Public Switched Telephone Network (PSTN), a packet switched network, a circuit switched network, a cellular network, a combination of these, and the like. The network 110A-110B can use a variety of electronic protocols, such as Ethernet, Internet Protocol (IP), Session Initiation Protocol (SIP), video protocols, Instant Messaging (IM) protocols, Integrated Services Digital Network (ISDN), and the like. Thus, the network 110A-110B are electronic communication networks configured to carry messages via packets and/or circuit switched communications.

The firewall 111 can be or may include any hardware coupled with software that provides protections services for an enterprise 150. The firewall 111 may include a Network Address Translator (NAT), a virus scanner, a port/address control system, and/or the like. The firewall 111 allows information (e.g., information in database 122) to be protected from unauthorized users/services in the network 110B.

The enterprise system 120 can be or may include any hardware coupled with software that can process a workflow or a portion of a workflow for a communication session. The enterprise system 120 further comprises enterprise workflow tasks 121, a database 122, and an enterprise workflow engine.

The enterprise workflow task(s) 121 are one or more events that have to occur in the enterprise as part of a split workflow for a communication session. For example, an enterprise workflow task 121 may be to get information from the database 122 or store information in the database 122. The enterprise workflow task(s) 121 are typically software objects that are downloaded to the enterprise system 120 that are executed during a communication session. As discussed herein, software objects may cover a variety of software objects, such as objects in an Extended Markup Language (XML) document, a Java Script Object Notation (JSON) file, and/or the like.

The database 122 can be or may include any type of information that can be stored in a memory or disk; the database 122 may be a relational database, a file system, an objected oriented database, a directory service, and/or the like. The database 122 may store information that is sensitive information to the enterprise 150. For example, the database 122 may contain customer's names, social security numbers, telephone numbers, bank account numbers, credit card numbers, health insurance information, medical records, shopping histories, customer contracts/agreements, and/or the like.

The enterprise workflow engine 123 can be or may include any hardware/software that can execute enterprise workflow tasks 121. The enterprise workflow engine 123 may interpret a generated file in various formats, such XML.

The provider system 130 can be or may include any hardware coupled with software that can be used to manage a communication session and/or workflows for the communication session. In this exemplary embodiment, the provider system 130 further comprises an Interactive Voice Response (IVR) system 131, an Automatic Call Distribution (ACD) system 132, a web server 133, a workflow software system 134, provider workflow tasks 135, a database 136, queue(s) 137, and an encryption module 138.

The IVR system 131 can be or may include any hardware coupled with software that can process voice interactions with a user. The IVR system 131 may be used to gather information about a caller to aid in the routing of a communication session. The IVR system 131 may also gather information from a caller that is used in a workflow. In one embodiment, the IVR system 131 may be a task in a workflow. For example, the IVR system 131 may be a voice-enabled task that preforms various IVR actions.

The ACD system 132 can be or may include any hardware coupled with software that can manage the routing of communication sessions in the provider system 130. The ACD system 132 can route different kinds of communication sessions, such as voice, video, text, IM, multi-media, virtual reality, and/or the like. The ACD system 132 may provide input to a workflow and may receive output from a workflow.

The web server 133 can be or may include any type of web server that can gather/send information to and from a user. The web server 133 may be used to gather information from a user that is used as input for a workflow. Similarly, output from a workflow may be used in web page on the web server 133.

The workflow software system 134 can be or may include any software development system that can be used to develop workflows for communication sessions. The workflow software system 134 can be used by a user to control how communication sessions/workflows are managed by the provider system 130. Although not shown in Fig. 1, the workflow software system 134 may be installed in the developer terminal 139 and/or distributed between the provider system 130 and the developer terminal 139.

The provider workflow task(s) 135 are one or more processes that have to occur in the provider system 130 as part of a split workflow for a communication session. For example, a provider workflow task(s) 135 may be configured to receive input from the IVR system 131, receive input from the web server 133, route a communication session to a particular contact center agent, route a communication session to the IVR system 131, provide an interface via the web server 133, send a text message, have the user join a virtual reality communication session, end a communication session, and/or the like. The provider workflow task(s) 135 are typically software objects that are executed by the provider system 130 during a communication session as part of a split workflow.

The database 136 can be or may include any type of information that can be stored in a memory or disk; the database 136 may be a relational database, a file system, an objected oriented database, a directory service, and/or the like. The database 136 may store information that that is used by the provider system 130. For example, the database 136 may store customer calling information, customer records, agent records, routing statistics, and/or the like.

The queue(s) 137 can be or may include any hardware/software that can place a communication session on hold until a contact center agent/IVR system 131 is ready to service the communication session. For example, an incoming voice communication session may be placed in a queue 137 until an available contact center agent is ready to service the voice communication session via an agent terminal 140.

The encryption module 138 can be or may include any hardware/software that can encrypt a communication session, such as Public Key Infrastructure (PKI), Data Encryption Algorithm (DES), Rivest-Shamir-Adleman (RSA), and/or the like. The encryption module 138 may be used to encrypt data sent between the provider system 130 and the enterprise system 120. The encryption may be full encryption of all the data and/or may be a simple signature that is used to detect tampering, such as an RSA signature.

Although not shown in Fig. 1, the provider system 130 may also comprise the enterprise workflow task(s) 121. For example, the provider system 130 may have the full workflow (provider workflow tasks 135/enterprise workflow tasks 121) while the enterprise has the enterprise workflow tasks 121. This allows the provider system 130 to have the full split workflow for a communication session.

The developer terminal 139 can be or may include any device that can be used to develop workflows for a communication session, such as a communication endpoint 101.

The agent terminals 140A-140N can be or may include one or more devices that can be used by a contact center agent to service a communication session, such as a communication endpoint 101. The developer terminals 140A-140N may comprise a plurality of developer terminals 140 for each contact center agent. For example, the contact center agent may have a personal computer and a separate telephone.

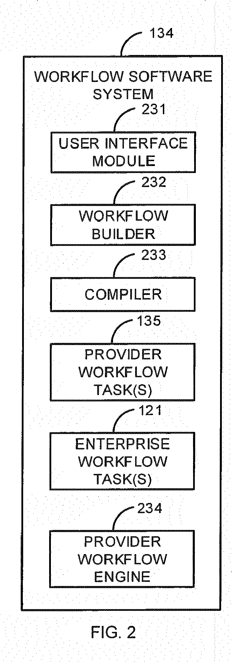

Fig. 2 is a block diagram of the elements of a workflow software system 134. The workflow software system 134 further comprises a user interface module 231, a workflow builder 232, a compiler 233, a provider workflow engine 234, provider workflow task(s) 135, and enterprise workflow task(s) 121.

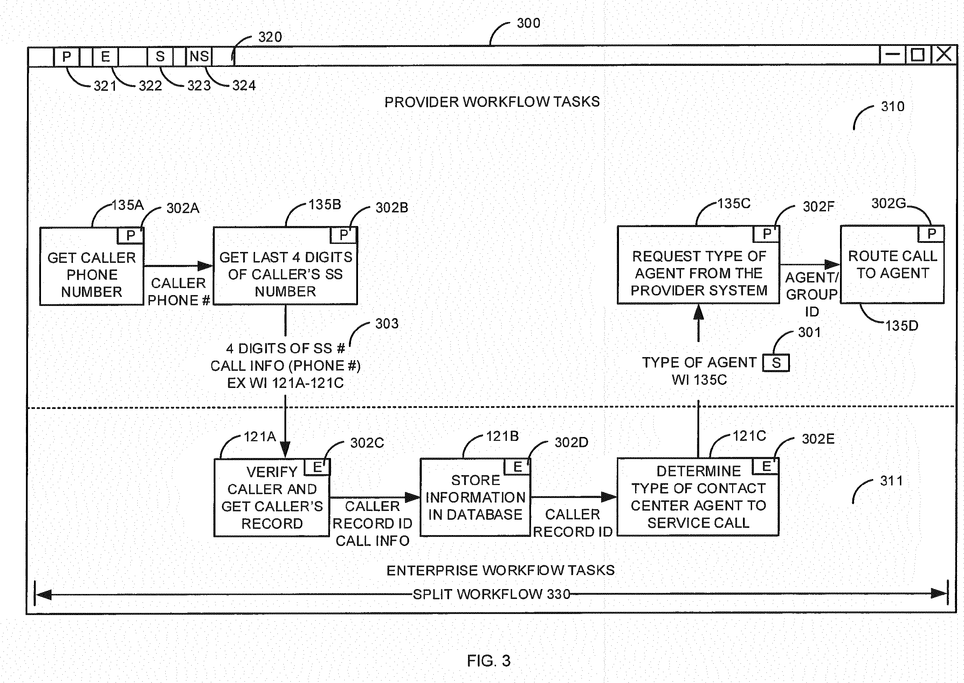

The user interface module 231 gives a user the ability to create graphical workflows. For example, as shown in Fig. 3, the user may develop a split workflow using the developer terminal 139/workflow software system 134. The user interface module 231 allows a user to select and connect different workflow tasks (121/135) to create a split workflow where provider workflow task(s) 135 run on the provider system 130 and the enterprise workflow task(s) 121 run on the enterprise system 120. In one embodiment, the user interface module 231 works in conjunction with the web server 133 to allow the user to develop a split workflow.

The workflow builder 232 can be or may include any software that receives input from the user interface module 231 to build a split workflow. The workflow builder 232 builds the completed workflow that is then provided to the compiler 233. In one embodiment, the workflow builder 232 and the compiler 233 may be combined. For example, the output from the user interface 231 may be an Extended Markup Language (XML) file that is interpreted by the provider system 130/enterprise system 120.

The compiler 233 can be or may include any software that can be used to take a split workflow and compile the split workflow into machine readable software objects that can be executed on the enterprise system 120 (enterprise workflow tasks 121) and on the provider system 130 (provider workflow tasks 135). The compiler 233 may be an interpreter. For example, the compiler 223 may be an interpreter based on the Java programming language that that can run on a java virtual machine on the provider system 130 and the enterprise system 120.

The provider workflow engine 234 can be or may include any hardware/software that can execute provider workflow tasks 135. The provider workflow engine 234 may execute files/modules generated by the workflow builder 232/compiler 233.

Fig. 3 is an exemplary graphical interface 300 for developing split workflows 330 for a communication session. Illustratively, the communication endpoints 101A-101N, the firewall 111, the enterprise system 120, the enterprise workflow task(s) 121, the database 122, the provider system 130, the IVR system 131, the ACD system 132, the web server 133, the workflow software system 134, the provider workflow task(s) 135, the database 136, the queue(s) 137, the encryption module 138, and the agent terminals 140A-140N are stored-program-controlled entities, such as a computer or microprocessor, which performs the method of Figs. 3-5 and the processes described herein by executing program instructions stored in a computer readable storage medium, such as a memory (i.e., a computer memory, a hard disk, and/or the like). Although the methods described in Figs. 3-5 are shown in a specific order, one of skill in the art would recognize that the steps in Figs. 3-5 may be implemented in different orders and/or be implemented in a multi-threaded environment. Moreover, various steps may be omitted or added based on implementation.

The graphical interface 300 is an exemplary graphical interface 300 where a user develops a split workflow 330. The graphical interface 300 shows an exemplary split workflow 330 that comprises seven workflow tasks 121A-121C/135A-135D. The graphical interface 300 is divided into two areas: 1) a provider workflow area 310, and 2) an enterprise workflow area 311.

The graphical interface 300 also comprises a workflow palate 320. The workflow palate 320 comprises a provider workflow task creator 321, an enterprise workflow task creator 322, a storage indicator 323, and a non-storage indicator 324. The user can select the provider workflow task creator 321 and then drag-and-drop an icon representing a provider workflow task 135 into the provider workflow area 310 to create a provider workflow task 135 in the split workflow 330. Likewise, a user can select the enterprise workflow task creator 322 and then drag-and-drop an icon representing an enterprise workflow task 121 into the enterprise workflow area 311 to create an enterprise workflow task 121 in the split workflow 330. Each of the workflow tasks 121/135 has an identifier 302A-302G that identifies the type of workflow task. For provider workflow tasks 135A-135D, the identifiers 302A, 302B, 302F, and 302G has a "P" to identify that the workflow task is a provider workflow task 135. For enterprise workflow tasks 121A-121C, the identifiers 302C-302E have an "E" to identify that the workflow task is an enterprise workflow task 121. One of skill in the art would recognize that this is just one of many ways a user can create a workflow for a communication session using a graphical user interface 300.

The user can drag-and-drop the storage indicator 323 or the non-storage indicator 324 onto an output variable that is returned by an enterprise workflow task 121 to identify if the variable can be stored or not stored by the provider system 130 after use. For example, the user indicated that the variable "TYPE OF AGENT" may be stored by the enterprise as shown by indicator 301. In one embodiment, the storage indicator 323 or the non-storage indicator 324 may be dragged-and-dropped onto a variable that is passed to an enterprise workflow task 121. For example, the user could drag-and-drop the non-storage indicator 324 onto the variable "4 DIGITS of SS #" to indicate that the enterprise system 120 cannot store this variable in the database 122 after it used by the enterprise workflow task 121A (or in the enterprise workflow tasks 121A-121C).

In one embodiment, the non-storage indicator 324 may indicate that only the next workflow task 121 and/or 135 may use the variable. In other words, the non-storage indicator indicates that the variable can only be used by the next workflow task 121 and/or 135 and cannot be stored or passed to another workflow task 121/135.

In the graphical interface 300, the user has defined a split workflow 330 that comprises four provider workflow tasks 135A-135D and three enterprise workflow tasks 121A-121C. The provider workflow task 135A is for handling a received call (e.g., from the communication endpoint 101A or 101B). Provider workflow task 135A captures the caller's phone number. The user can also define input(s) and/or output(s) for each of the workflow tasks (121/135). For example, caller's phone number is an output from the provider workflow task 135A.

For the provider workflow task 135B, the user has defined that the caller's phone number is an input. In the provider workflow task 135B, the IVR system 131 asks for the caller's last four digits of their social security number. When the last four digits of the caller's social security number are captured by the IVR system 131, the provider workflow task 135B calls the enterprise workflow task 121A. The user has set the provider workflow task 135B to provide the captured last four digits of the social security number, the caller's phone number, and other caller information. For example, the other caller information may include the time of the call, the date of the call, and/or the like. When the provider workflow task 135B calls the enterprise workflow task 121A, the provider workflow task 135B passes identifiers of the enterprise workflow tasks 121A-121C that are to be executed on the enterprise system 120 (e.g., identifiers of software objects to be executed on the enterprise system 120). In this case, there are three identifiers (consecutively executed software objects) for the enterprise workflow tasks 121A-121C. Alternatively, the provider workflow task 135B may only send an identifier for the first workflow task 121A to be executed because the enterprise system 120 may already know the sequence of consecutive enterprise workflow tasks 121A-121C that need to be executed on the enterprise system 120. In one embodiment, the identifier of an enterprise workflow task 121A is not passed because the enterprise system 120 knows the full split workflow 330. In another embodiment, identifiers of the first and last enterprise workflow tasks 121A and 121C are passed (where there are three or more enterprise workflow tasks 121. In another embodiment, the identifier of the workflow task 135B is passed. In this embodiment, the enterprise system 120 has the full split workflow and knows that the enterprise workflow task 121A is the next workflow task.

The enterprise system 120 uses the received identifier of the workflow task(s) 121A to execute the workflow tasks 121A-121C on the enterprise system 120. The enterprise system 120 passes the last four digits of the social security number and the caller information (i.e., the caller's phone number, data/time of the call) to the enterprise workflow task 121A in step 303.

Workflow task 121A uses the last four digits of the social security number and the caller's phone number to verify the caller and get the caller's record (assuming that the caller is a known person). The caller's record may contain various types of information associated with the caller, such as, the caller's account number, recent calls by the caller to a contact center, name, address, credit card numbers, health records, purchase histories, and/or the like. The output of the workflow task 121A passes an identifier to the caller's record and the call information to the enterprise workflow task 121B. The workflow task 121B looks up the caller's record, adds additional information to the caller's record (e.g., that the caller made a call at a specific time/date, a new phone number if the caller calls using a new telephone number, etc.) and then stores the caller information in the caller record in the database 122. The workflow task 121B passes the caller record identifier to the workflow task 121C.

The workflow task 121C determines, based on a context from the information in the caller's record, a type of contact center agent to service the call. For example, if the caller is a high value caller (e.g., the caller makes regular purchases or is a gold customer who has a contract with the enterprise 150), a specific agent or type of agent may be selected (e.g., a designated technical specialist). If the customer is a low value customer that rarely purchases products, a different type of agent may be selected (e.g., a contact center agent with less experience). Alternatively, if the caller has been dropped from several previous calls, the caller may be directed to the first available contact center agent in a specific group of contact center agents. If the caller cannot be identified in the enterprise workflow tasks 121A-121C (e.g., the last four digits of the caller's social security number do not match any customer records), the type of agent may be a general agent that can determine actually who the caller is and the purpose of the call (this may spawn a different split workflow 330. The workflow task 121C sends the type of agent (or a specific agent) to the provider system 130.

In addition, the enterprise system 120 may also send an identifier of the next workflow task 135C to be executed on the provider system 130. Alternatively, the enterprise system 120 may send an identifier of the enterprise workflow task 121C. The identifier (for workflow task 121C) allows the provider system 130 to know that the provider workflow task 135C is the next workflow task to be executed because the provider system knows that provider workflow task 135C is the next workflow task. In one embodiment, the identifier is not provided. The provider system 130 already knows that when it receives a callback from the enterprise system 120 that the next workflow task is provider workflow task 135C.

The returned variable "TYPE OF AGENT" is a variable that can be stored by the provider system 130. For example, the provider system 130 may store the returned type of agent variable in the database 136.

The provider workflow task 135C requests the type of agent (or the specific agent) from the provider system 130. For example, the provider workflow task 135C may get, based on the type of agent returned from the enterprise workflow task 121C, an agent group identifier or a set of desired agent attributes (e.g., if used for attribute routing) for a specific group of contact center agents (e.g., a group that supports product X) or an identifier for a specific contact center agent. The identifier may identify an address of an agent terminal 140 or may be the address of the contact center queue 137 for the group of contact center agents. The provider workflow task 135C passes the agent/group identifier to the provider workflow task 135D.

In the provider workflow task 135D, the ACD system 132 routes the call from the communication endpoint 101 to the contact center agent terminal 140 (either directly or via a queue 137). The contact center agent then handles the call with the caller.

One advantage to the split workflow 330 of Fig. 3 is that no sensitive information leaves the enterprise 150. All the sensitive information that is processed in the enterprise workflow tasks 121A-121C (e.g., looking up the caller record that contains the sensitive information) is not passed to the provider system 130.

Fig. 3 is a non-limiting example one type of split workflow 330 that may be created for a communication session. A split workflow 330 may be created for various types of communications, such as, video communications, text communications, email communications, IM communications, virtual reality communications, and/or the like. A split workflow 330 may be based on various types of workflows that involve different elements/services, such as, the IVR system 131, the ACD system 132, the web server 133, the queue(s) 137, emails systems, voicemail systems, IM systems, conferencing systems, call transfer services, billing services, call forking services, customer support services, call hold services, and/or the like. For example, a workflow may be for routing contact center voice call to a virtual reality chat room (via an application installed on the caller's communication endpoint 101) or to queue the voice call in the queue 137.

The above process describes one exemplary way to build a workflow. One of skill in the art would envision other ways that a workflow may be developed. For example, a user may create a workflow without defining whether a workflow task is provider workflow task 135 or an enterprise workflow task 121. After the workflow has been defined, the developer can then define which of the workflow tasks will be executed in the enterprise system 130 or in the provider system 130.

The above process is described in an exemplary embodiment where the enterprise workflow tasks/121provider workflow tasks 135 call each other. However, in another embodiment, the enterprise workflow engine 123/provider workflow engine 234 are used to execute the split workflow 330. For example, in Fig. 3, the provider workflow engine 234 starts by executing the provider workflow task 135A. After the workflow task 135A has been completed, control is passed back to the provider workflow engine 234. When the provider workflow task 135B is completed, a message is sent, by the provider workflow engine 234 (i.e., determined at runtime or deployment time), to the enterprise workflow engine 123, which then executes the enterprise workflow task 121A. The provider workflow engine 234 tells the enterprise workflow engine where to pick up execution (i.e., start execution using enterprise workflow task 121A). When the enterprise workflow task 121A is completed, control is passed back to the enterprise workflow engine 123. The enterprise workflow engine 123 then executes the enterprise workflow task 121B. Once enterprise workflow task 121B is completed, control passes back to the enterprise workflow engine 123. The enterprise workflow engine 123 then executes the enterprise workflow task 121C. Once control is completed, control passes back to the enterprise workflow engine 123, which then sends the message to the provider workflow engine 234. The enterprise workflow engine 123 tells the provider workflow engine 234 where to pick up execution (i.e., to start execution using provider workflow task 135C. The provider workflow engine 234 than executes the enterprise workflow task 135C. Once the provider workflow task 135C is complete, control is then passed to the provider workflow engine 234. The provider workflow engine 234 then executes the provider workflow task 135D. Once the provider workflow task 135D completes, control is passed back to the provider workflow engine 234 and the workflow then ends.

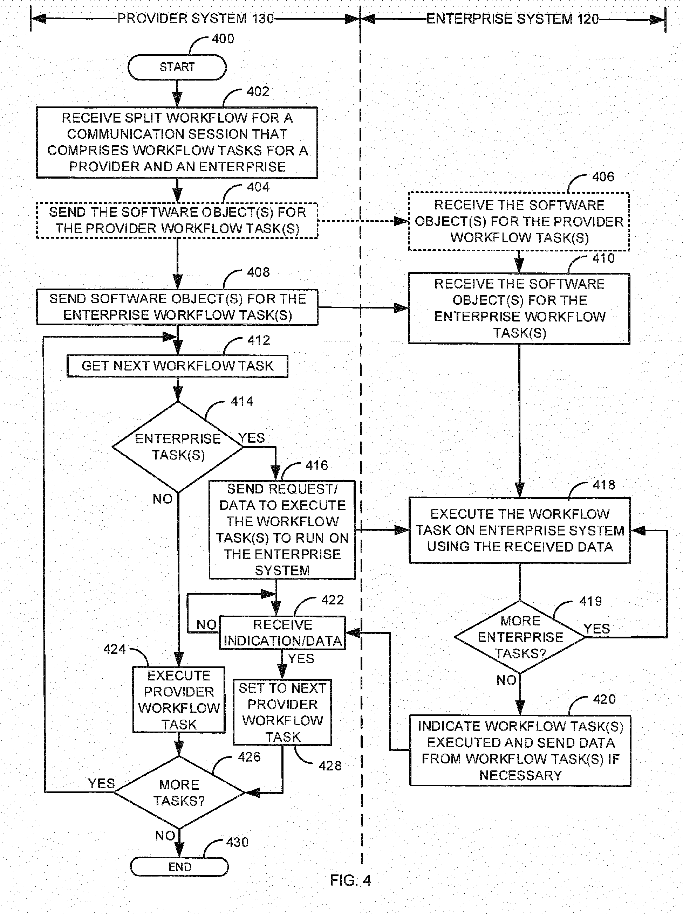

Fig. 4 is a flow diagram of a process for implementing split workflows 330. Fig. 4 shows the flow between the provider system 130 (on the right side of Fig. 4) and the enterprise system 120 (on the left side of Fig. 4). The process of Fig. 4 is discussed in relation to the split workflow 330 described in Fig. 3.

The process starts in step 400. The provider system 130 (i.e., the provider workflow engine 234) receives, in step 402, a split workflow 330 for a communication session. As described above in Figs. 2-3, the split workflow 330 may be developed by a user and complied so that it can execute the provider workflow tasks 135 on the provider system 130 and execute the enterprise workflow tasks 121 on the enterprise system 120.

The provider system 130 may optionally send, in step 404, the software object(s) (generated by the compiler 233) for the provider workflow tasks 135A-135D to the enterprise system 120. The enterprise system 120 (i.e., the enterprise workflow engine 123) receives and stores, in step 406, the software objects for the provider workflow tasks 135A-135D. The provider system 130 sends, in step 408, the software object(s) (generated by the compiler 233) for the enterprise workflow tasks 121A-121C to the enterprise system 120. The enterprise system 120 receives and stores, in step 410, the software objects for the enterprise workflow tasks 121A-121C. Depending on implementation, the enterprise system 120 may only need the software objects for the enterprise workflow tasks 121A-121C or may need all the software objects for the split workflow 330. In one embodiment, software objects for the whole split workflow 330 are all sent in a single step and received in a single step.

In one embodiment, the entire workflow is deployed in both the enterprise workflow engine 123 and the provider workflow engine 234. In this embodiment, workflow tasks are specifically marked for where they are to be executed.

The process of steps 400-408 may be implemented as a separate thread that downloads the software objects for the split workflow 330 to the enterprise system 120. Steps 412-430 may also be executed on a different thread.

When the split workflow 330 is ready to be executed (i.e., based on an incoming call), the provider system 130 gets, in step 412, the next workflow task. In this case, the provider system 130 gets the workflow task 135A in step 412. The provider system 130 determines that the workflow task 135A is not an enterprise workflow task 121 in step 414. The provider system 130 executes the provider workflow task 135A in step 424. The provider system 130 determines, in step 426, that there are more workflow tasks. The provider system 130 gets the next workflow task (provider workflow task 135B) in step 412. The provider system 130 determines, in step 414, that the provider workflow task 135B is not an enterprise workflow task 121. The provider system 130 executes the provider workflow task 135B in step 424.

The provider system 130 determines, in step 426, that there are more workflow tasks. The provider system 130 gets the next workflow task (enterprise workflow task 121A). In this case, the provider system 130 determines, in step 414, that the workflow task is an enterprise workflow task 121A. The provider system 130 sends a request/data to execute the enterprise workflow tasks 121A-121C to run on the enterprise system 120 in step 416. For example, the provider system 130 may send an identifier of the enterprise workflow task 121A or an identifier for all of the enterprise workflow tasks 121A-121C. In order to do so, the provider system 130 analyzes the input parameters for each of the enterprise workflow items 121A-121C to identify all the necessary parameters to pass to the enterprise system 120. The provider system 130 determines which of the parameters are being supplied as output parameters from other enterprise workflow tasks 121 and which parameters are coming from variables populated by the enterprise workflow tasks. This information is sent along with an indicator of where to begin execution of the workflow (e.g., the enterprise workflow task 121A). The provider system 130 then waits, in step 422, to receive the output from the enterprise workflow task 121C.

The enterprise system 120 executes the enterprise workflow tasks 121Ain step 418. This includes the necessary input/output parameters. The enterprise system 120 determines, in step 419, if there are any more enterprise workflow tasks 121. In this example, the enterprise workflow tasks 121B-121C are in the enterprise workflow. The process of step 418-419 are repeated for the workflow tasks 121B-121C. The enterprise system 120 sends an indication that the workflow tasks 121A-121C have executed on the enterprise system 120 in step 420. As part of this process, the enterprise system 120 also determines the parameters to send back to the provider system 120. The enterprise system 120 does a similar analysis (like in step 303) of the workflow to determine what parameters are needed on the provider system 130 (e.g., what kind of agent is needed). This keeps sensitive information completely local to the enterprise system 120, and alleviates the need for the provider system to "forget" anything that is sensitive because the sensitive data never gets to the provider system 130 in the first place. As shown in Fig. 3, the data is the type of agent and an identifier of the workflow task 135C. The provider system 130 receives the indication/data from the enterprise system 120 in step 422. The provider system 130 sets, in step 428, the counter of workflow tasks to the next provider workflow task 135C (because the enterprise system 120 executed the enterprise workflow tasks 121A-121C).

The provider system 130 determines that there are more workflow tasks in step 426. The provider system 130 gets, in step 412, the next workflow task (provider workflow task 135C as set to in step 428). The provider system 130 determines, in step 414, that the provider workflow task 135C is a provider workflow task 135C. The provider system 130 executes the provider workflow task 135C in step 424. The provider system 130 determines that there is one more workflow task in step 426. The provider system 130 gets the next workflow task (provider workflow task 135D) in step 412. The provider system 130 determines, in step 414, that the provider workflow task 135D is a provider workflow task 135D. The provider system 130 executes the provider workflow task 135D in step 424. The provider system 130 determines, in step 426, that there are no more workflow tasks and the process ends in step 430.

The process of Fig. 4 is discussed in relation to the split workflow 330 shown in Fig. 3. However, the process of Fig. 4 may be used any type of split workflow 330. For example, the process of Fig. 4 may be used for an email workflow, a voicemail workflow, a conference system workflow, and/or the like.

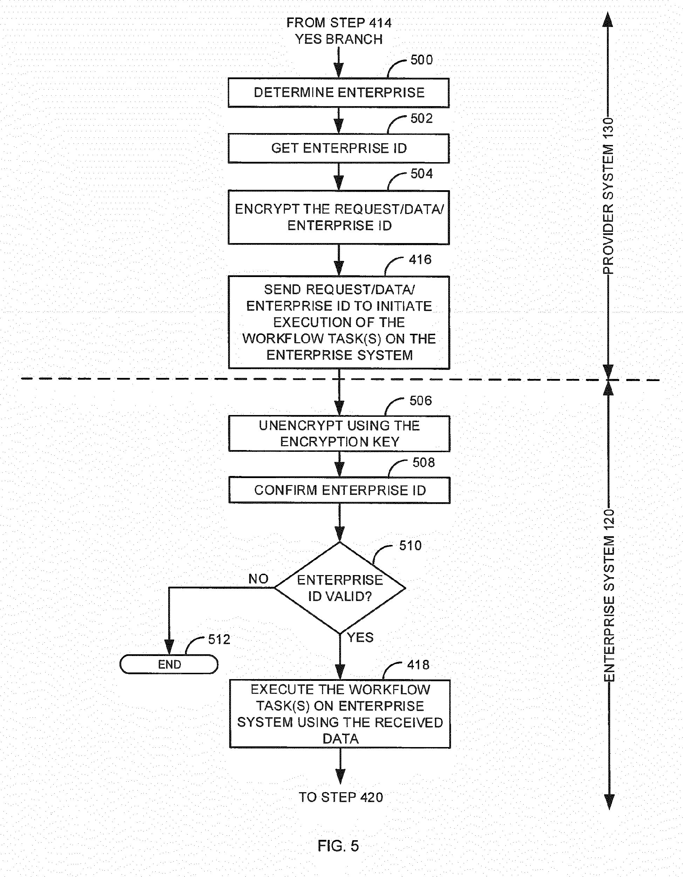

Fig. 5 is a flow diagram of a process for allowing for multiple enterprises 150 to use different cloud based split workflows 330. Fig. 1 only shows a single enterprise using a single provider system 130. However, in some embodiments, the provider system 130 may be a cloud based provider system 130 that supports multiple enterprises 150. The provider system 130 can provide the same or different split workflows 330 to each enterprise 150. In order to do so, the provider system 130 needs to distinguish between the different enterprises 150. Fig. 5 discloses an exemplary, but not limiting, embodiment that allows a cloud based provider system 130 to support multiple enterprises 150.

The process of Fig. 5 starts after the yes branch of step 414 where the provider system 130 determines that the workflow task is an enterprise workflow task 121. The provider system 130 determines, in step 500, the enterprise 150 associated with the enterprise workflow task 121. For example, the enterprise workflow task 121 may be associated with company X. Based on the determined enterprise 150, the provider system 130 gets the enterprise identifier associated with the enterprise in step 502. For example, a unique number or text string may be associated with each enterprise 150. The provider system 130, via the encryption module 138, encrypts, in step 504, the request, data, and the enterprise identifier (used in step 416). Alternatively, the encryption module 138 may sign the request/data/enterprise ID in step 504 (or a combination of encryption/signature).

The provider system 130 sends the request, data, and the enterprise identifier to initiate execution of the workflow tasks in step 416. The enterprise system 120 receives the encrypted request and unencrypts the request, data, and enterprise identifier in step 506. The enterprise system 120 confirms if the enterprise identifier is valid in step 508. If the enterprise identifier is not valid in step 510, the process ends in step 512. Otherwise, if the enterprise identifier is valid in step 510, the enterprise system 120 executes the enterprise workflow tasks 121 in step 418 and the process goes to step 420.

The process described in Fig. 5 may be used for any communications between the provider system 130 and the enterprise system 120. For example the information sent between steps 404/406, 408/410, and 420/422 may use a similar process to encrypt/unencrypt data and an enterprise identifier. A similar process is flowed in the reverse when the enterprise system 12o is ready to resume execution on the provider system 130. The enterprise system 120 would sign or encrypt the request using its own private key and the provider would decrypt or validate the signature using the enterprise systems certificate.

The above processes are described in relation to a communication session. However, in other embodiments, the above processes may work with other types of workflows, such as a low inventory event that is used to initiate a split workflow 300.

Examples of the processors as described herein may include, but are not limited to, at least one of Qualcomm® Snapdragon® 800 and 801, Qualcomm® Snapdragon® 610 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

Any of the steps, functions, and operations discussed herein can be performed continuously and automatically.

However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should however be appreciated that the present disclosure may be practiced in a variety of ways beyond the specific detail set forth herein.

Furthermore, while the exemplary embodiments illustrated herein show the various components of the system collocated, certain components of the system can be located remotely, at distant portions of a distributed network 110, such as a LAN and/or the Internet, or within a dedicated system. Thus, it should be appreciated, that the components of the system can be combined in to one or more devices or collocated on a particular node of a distributed network 110, such as an analog and/or digital telecommunications network, a packet-switch network, or a circuit-switched network. It will be appreciated from the preceding description, and for reasons of computational efficiency, that the components of the system can be arranged at any location within a distributed network 110 of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the disclosure.

A number of variations and modifications of the disclosure can be used. It would be possible to provide for some features of the disclosure without providing others.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as program embedded on personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the embodiments with reference to particular standards and protocols, the disclosure is not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various embodiments, configurations, and aspects, includes components, methods, processes, systems and/or apparatus substantially as depicted and described herein, including various embodiments, sub-combinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease and\or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights which include alternative embodiments, configurations, or aspects to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A method comprising:
receiving, by a microprocessor, a workflow;
identifying, by the microprocessor, one or more provider workflow tasks in the workflow;
identifying, by the microprocessor, one or more enterprise workflow tasks in the workflow;
executing, by the microprocessor, the identified one or more provider workflow tasks on a provider system according to the workflow; and
initiating, by the microprocessor, execution of the identified one or more enterprise workflow tasks on an enterprise system according to the workflow.

2. The method of claim 1 further comprising:
sending, by the microprocessor, to the enterprise system, software objects for the identified one or more enterprise workflow tasks.

3. The method of claim 2, wherein sending the software objects to the enterprise system further comprises sending, to the enterprise system, software objects for the identified one or more provider workflow tasks.

4. The method of claim 1, wherein at least one of the one or more provider workflow tasks includes an identifier for a variable that is received from one of the one or more enterprise workflow tasks and wherein the variable is identified to not be storable in a memory after use.

5. The method of claim 1, wherein initiating execution of the identified one or more enterprise workflow tasks further comprises executing a plurality of consecutive workflow tasks on the enterprise system.

6. The method of claim 5, wherein initiating execution of the identified one or more enterprise workflow tasks comprises sending an identifier to the enterprise system that identifies each of the consecutive workflow tasks to execute on the enterprise system.

7. The method of claim 5, wherein initiating execution of the identified one or more enterprise workflow tasks comprises sending an identifier to the enterprise system that identifies a first workflow task in the consecutive workflow tasks.

8. The method of claim 1, wherein the provider system supports a plurality of enterprises and wherein initiating execution of the identified one or more enterprise workflow tasks comprises sending an enterprise identifier and wherein the enterprise system confirms that the enterprise identifier is valid before executing the identified one or more enterprise workflows tasks on the enterprise system.

9. The method of claim 1, wherein the enterprise system and/or the provider system determines parameters to be sent between the enterprise system and the provider system by analyzing input and output parameters of the workflow provided to the enterprise system and/or the provider system.

10. A system comprising:
a microprocessor; and
a computer readable medium, coupled with the microprocessor and comprising microprocessor readable and executable instructions that program the microprocessor to execute:
a provider system that receives a workflow, identifies one or more provider workflow tasks in the workflow, identifies one or more enterprise workflow tasks in the workflow, executes the identified one or more provider workflow tasks on the provider system according to the workflow, and initiates execution of the identified one or more enterprise workflow tasks on an enterprise system according to the workflow.

11. The system of claim 10 wherein the provider system sends, to the enterprise system, software objects for the identified one or more enterprise workflow tasks wherein the provider system sends, to the enterprise system, software objects for the identified one or more provider workflow tasks.

12. The system of claim 10, wherein at least one of the one or more provider workflow tasks includes an identifier for a variable that is received from one of the one or more enterprise workflow tasks and wherein the variable is identified to not be storable in a memory after use.

13. The system of claim 10, wherein initiating execution of the identified one or more enterprise workflow tasks further comprises executing a plurality of consecutive workflow tasks on the enterprise system and wherein initiating execution of the identified one or more enterprise workflow tasks comprises sending an identifier to the enterprise system that identifies each of the consecutive workflow tasks to execute on the enterprise system.

14. The system of claim 10, wherein initiating execution of the identified one or more enterprise workflow tasks further comprises executing a plurality of consecutive workflow tasks on the enterprise system and wherein initiating execution of the identified one or more enterprise workflow tasks comprises sending an identifier to the enterprise system that identifies a first workflow task in the consecutive workflow tasks.

15. A software development system comprising:
a user interface module that receives input from a user to build a workflow;
a workflow builder that takes the user input to build the workflow, wherein the workflow comprises a plurality of workflow tasks, wherein the plurality of workflow tasks further comprise one or more provider workflow tasks and one or more enterprise workflow tasks; and
a compiler that complies the workflow to indicate that the one or more provider workflow tasks will be executed on a provider system and the one or more enterprise workflow tasks will be executed on an enterprise system.
